# DEMANDE DE BREVET EUROPEEN

(11) **EP 2 415 636 A2**
(43) Date de publication de la demande: **08.02.2012**
(21) Numéro de dépôt: 11175699.5
(22) Date de dépôt: 28.07.2011
(51) Int. Cl.: B60Q 1/08

(54) **Système d'éclairage pour véhicule**

(30) Priorité: 06.08.2010 FR 1056491
(71) Demandeur: Valeo Vision, 93012 Bobigny (FR)
(72) Inventeur: Le Bars, Jean-François, 89275 ELCHINGEN (DE)

(57) **Abrégé**

La présente invention concerne un système d'éclairage pour véhicule automobile comprenant au moins un module d'éclairage (1) configuré pour générer au moins un faisceau présentant une coupure (3) en partie supérieure, caractérisé en ce qu'il comprend des moyens d'émission (4, 5) d'au moins un faisceau additionnel (6, 7) configurés de sorte que le faisceau additionnel (6, 7) est mobile et est situé au moins en partie au-dessus de ladite coupure (3).

## Description

La présente invention porte sur un système et sur un procédé d'éclairage pour véhicule automobile.

Dans le domaine des éclairages automobiles, on connaît différents modules d'éclairage ou projecteurs, parmi lesquels on trouve essentiellement :
- des feux de position, d'intensité et de portée faibles;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé. Typiquement, le faisceau présente une coupure oblique en partie supérieure, afin de ne pas éclairer la zone dans laquelle le conducteur d'un véhicule arrivant en sens inverse devrait se trouver. Cette coupure oblique est obtenue par exemple grâce à un cache intégré dans le projecteur et interceptant une partie du flux lumineux émis.
- des feux de route longue portée, dont la zone de portée sur la route peut atteindre 600 mètres, et qui doivent être éteints lorsque l'on croise un autre véhicule afin de ne pas éblouir son conducteur;
- des feux anti-brouillard.

Dans la pratique, un conducteur doit donc alternativement passer de la fonction route dans laquelle la visibilité est la meilleur à la fonction code dans laquelle la visibilité est moins bonne mais dans laquelle les conducteurs arrivant en sens inverse ne sont pas éblouis. Cette commutation est source d'insécurité si le conducteur oublie de désactiver la fonction route lorsque un véhicule est croisé ou si le conducteur oublie de repasser de la fonction code à la fonction route alors que la visibilité est trop médiocre. Cette commutation est tout au moins source d'inconfort pour le conducteur.

Dans le but général d'améliorer la sécurité et le confort de conduite en terme de visibilité, il existe dans l'état de la technique, des modules optiques bifonctions dont la commutation de la fonction code à la fonction route, et vice-versa, est automatique et dépend des conditions de circulation. Avec des véhicules équipés de tels modules bifonctions, on procède, le plus souvent à l'aide d'une caméra, à la recherche de la présence d'un véhicule susceptible d'être ébloui par une utilisation de la fonction route. Si aucun véhicule n'est détecté, la fonction route est automatiquement activée. Dès que la présence d'un véhicule est détectée, la fonction route est automatiquement désactivée, et le véhicule équipé du projecteur bifonctions présente de nouveau un faisceau lumineux de type code.

Dans la pratique, la valeur seuil à partir de laquelle l'absence de véhicule détecté autorise la commutation vers la fonction route est approximativement de 400 mètres. Dès qu'un véhicule est détecté à moins de 400 mètres du véhicule équipé, c'est la fonction code qui est activée. Or cette fonction n'assure un éclairage satisfaisant que sur une distance avoisinant 70 mètres au niveau de la partie centrale de la route, et de 100 mètres sur le bas-côtés de la voie ou circule le véhicule (soit le bas-côté droit dans le cadre d'un trafic à droite); l'éclairage réalisé étant ainsi essentiellement sur la droite de la route dans le cas d'une circulation à droite, le côté gauche de la chaussée étant nettement moins éclairé. Il existe donc de nombreuses configurations de circulation, celles dans lesquelles le premier véhicule susceptible d'être ébloui est situé à plus d'une centaine de mètres et à moins de 400 mètres du véhicule équipé, pour lesquelles l'éclairage de la route pourrait être optimisé sans pour autant éblouir le conducteur d'un quelconque autre véhicule.

On a alors proposé des solutions consistant à découper un faisceau lumineux global émis par un véhicule en différentes portions adjacentes, chaque portion correspondant à un secteur angulaire du faisceau global. Ainsi, si le véhicule croisé ou suivi est présent dans une portion donnée, un faisceau lumineux global optimisé consisterait à rendre non éblouissante uniquement la portion donnée du faisceau lumineux global. Par portion non éblouissante, on désigne un secteur angulaire du faisceau lumineux global dans lequel le faisceau est concentré uniquement sous la ligne d'horizon, lorsqu'il atteint, ou avant d'atteindre, le véhicule suivi ou croisé.

Pour atteindre un tel objectif, une solution de l'état de la technique prévoit de réaliser un projecteur faisant intervenir une pluralité de diodes électroluminescentes (DELs), disposées de telle sorte que chaque DEL, ou groupe de DELs, est plus particulièrement utilisé pour la production du faisceau lumineux dans une des portions du faisceau lumineux global. Pour créer une portion non éblouissante, il suffit alors d'intervenir sur les DELs associées à la portion considérée, par exemple en les éteignant.

Mais une telle solution présente un certain nombre d'inconvénients : d'une part, elle est coûteuse principalement du fait du nombre de DELs utilisées. Ensuite, pour les mêmes raisons, elle est encombrante et lourde. Enfin, elle crée un phénomène de scintillement lorsque le véhicule passe d'une portion à l'autre.

Une autre solution de l'état de la technique prévoit d'intégrer un cache dans le projecteur du véhicule. Le cache est mobile et occulte une partie du flux lumineux émis, générant de ce fait une zone non éblouissante. Des moyens de détection du véhicule arrivant en sens inverse permettent de commander le positionnement adéquat du cache.

Cette solution présente plusieurs inconvénients. Notamment, le projecteur équipé du cache est particulièrement complexe à fabriquer. Le positionnement du cache et son mécanisme d'entraînement tendent à accroître significativement l'encombrement du projecteur.

En outre, un tel projecteur consomme une énergie relativement importante et dissipe beaucoup de chaleur pour l'éclairage final obtenu.

Il existe donc un besoin consistant à fournir une solution qui ne présente pas, ou tout au moins qui limite, au moins certains des inconvénients précités. En particulier, il serait avantageux d'offrir une solution d'éclairage permettant de ne pas éblouir un véhicule arrivant en sens inverse tout en améliorant la visibilité du conducteur par rapport à la fonction code et tout en induisant un encombrement et/ou une puissance réduite.

A cet effet, on prévoit selon l'invention un système d'éclairage pour véhicule automobile comprenant au moins un module d'éclairage configuré pour générer un faisceau présentant une coupure en partie supérieure et comprenant des moyens d'émission d'au moins un faisceau additionnel configurés de manière à ce que le faisceau additionnel est mobile par rapport au faisceau présentant la coupure et est situé au moins en partie au dessus de ladite coupure. Ainsi, le système permet d'éclairer au-delà du faisceau à coupure, offrant de ce fait une visibilité améliorée. Par exemple, si le module d'éclairage est configuré pour réaliser un faisceau lumineux de type code présentant une coupure en partie supérieure, le faisceau additionnel permet d'éclairer la route au-delà de la coupure du faisceau de code. La mobilité du faisceau additionnel permet d'adapter la position de ce faisceau additionnel par exemple en fonction de véhicule arrivant en sens inverse, par exemple sur la base des informations issues d'une caméra située le plus souvent à l'intérieur du véhicule à hauteur du rétroviseur central.

L'invention permet de se passer d'un cache pour occulter une partie du faisceau puisque toute la lumière émise est dirigée vers la zone à éclairer. L'encombrement du système est par conséquent limité. De plus, toute la puissance lumineuse émise est utilisée ce qui améliore significativement le rendement énergétique du système. La puissance générée par la source lumineuse peut ainsi être réduite par rapport à un éclairage identique avec cache occultant. En outre, la puissance thermique dissipée au niveau des moyens d'émission est moins importante qu'avec un cache puisque le flux lumineux n'est pas bloqué. Préférentiellement, pour réaliser la lumière émise dirigée vers la zone à éclairer, l'invention met en oeuvre un système optique basé sur le principe de l'imagerie directe d'une source qui, lorsqu'elle est allumée, présente une surface éclairée avec des bords nets. L'imagerie directe de cette source est réalisée au travers d'un système optique, tel qu'une lentille. L'invention permet par conséquent de réduire les performances et la taille des moyens d'évacuation des calories, limitant de ce fait l'encombrement du système.

De manière facultative, l'invention comprend en outre au moins l'une quelconque des caractéristiques suivantes :
- Le module d'éclairage est configuré pour réaliser un faisceau lumineux de type code présentant une coupure en partie supérieure et/ou pour réaliser un faisceau lumineux de type route.
- Les moyens d'émission sont agencés de sorte que ledit au moins un faisceau additionnel est au moins mobile en rotation autour d'une direction sensiblement verticale. De manière plus générale, le faisceau additionnel présente une mobilité dans un plan essentiellement horizontal. Typiquement, il est mobile selon un secteur angulaire compris entre -8° et +20°, et plus avantageusement selon un secteur angulaire compris entre -5° et +18°.
- Les moyens d'émission comprennent un premier dispositif d'émission agencé pour générer un premier faisceau additionnel et un deuxième dispositif d'émission agencé pour générer un deuxième faisceau additionnel. Le premier et le deuxième faisceaux additionnels sont mobiles indépendamment l'un de l'autre. Ils sont situés au moins en partie au dessus de la coupure.

Avantageusement, les moyens d'émission sont agencés de sorte que les premier et deuxième faisceaux additionnels sont décalés selon une direction horizontale. Ainsi, les moyens d'émission comprennent un faisceau additionnel gauche et un faisceau additionnel droit.

Avantageusement, les moyens d'émission comprennent au moins une diode émettrice de lumière (DEL) pour générer ledit au moins un faisceau additionnel. De plus, lorsqu'elle est allumée, la diode émettrice de lumière présente une surface éclairée avec des bords nets. Ainsi, la diode émettrice émet depuis une surface géométrique précise, généralement carrée ou rectangulaire. Les zones contiguës à la zone émettrice sont sombres. La transition entre la zone émettrice et ces zones contiguës, se réduit à une dimension de l'ordre de quelques dizaines de microns. Ceci est particulièrement important pour diminuer le plus possible les éblouissements des usagers venant en sens inverse. La nature abrupte ou nette de la surface d'émission de la diode est obtenue soit directement par la structure même du semi-conducteur constituant la diode, par exemple un semi-conducteur avec des flancs raides, ou des flancs masqués, soit par un écran mécanique ou un dépôt par métallisation ou peinture sur une lame de verre accolée à l'écran. De préférence, le rapport de luminance entre la zone émettrice et la zone sombre doit être supérieur à 50, de préférence 100, encore plus préférentiellement 1000.

Préférentiellement, la réalisation du faisceau additionnel est obtenue par imagerie directe de la surface émettrice de ladite diode par un dispositif optique telle qu'une lentille de type asphérique.

Avantageusement, la diode électroluminescente présente une surface éclairée avec des bords nets. Ceci est particulièrement avantageux lorsque la réalisation du faisceau additionnel est obtenue par imagerie directe de la surface émettrice de ladite diode

De manière également avantageuse, la netteté requise des bords de ladite surface éclairée est réalisée :
- par un écran mécanique à proximité de la diode ou de l'image de la diode dans un plan intermédiaire,
- par métallisation d'une glace optique fine accolée à la diode, ou
- au moyen d'une diode dont l'élément photoémissif de la diode présente des flancs raides, ou des flancs masqués.

Le système comprend des moyens d'évacuation des calories générées par les moyens d'émission. Préférentiellement, les moyens d'évacuation comprennent des ailettes associées à la source lumineuse, typiquement une diode. Cette solution est particulièrement peu encombrante et peu coûteuse. Elle est parfaitement adaptée lorsque la puissance thermique dissipée par la source lumineuse est relativement basse, typiquement inférieure à 10 Watts. Cette alternative est privilégiée dans le cas où la source lumineuse comporte une diode unique de l'ordre de 5 Watts.

De manière alternative ou cumulée, les moyens d'évacuation comprennent un ventilateur. Cette alternative est privilégiée lorsque plusieurs sources de lumière, typiquement plusieurs diodes sont utilisées pour générer un faisceau.

Préférentiellement, le système comprend des moyens de détection et de localisation d'un obstacle, des moyens de traitement configurés pour définir au moins une zone à éclairer en fonction de la détection et de la localisation dudit obstacle et des moyens de commande pour diriger ledit au moins un faisceau additionnel sur ladite au moins une zone à éclairer.

Ainsi l'invention permet d'assurer une fonction de type d'éclairage adaptatif directionnel, usuellement désigné par son acronyme anglo-saxon ADB pour Adaptive Driving Beam.

Avantageusement, au fur et à mesure de l'avancée relative du véhicule équipé d'un système selon l'invention par rapport à l'obstacle, le système réactualise la position et la largeur de la zone à éclairée. Le ou les faisceaux additionnels se déplacent donc en fonction de l'avancée du véhicule équipé.

Avantageusement, les moyens de traitement sont configurés pour identifier l'obstacle et pour définir la zone à éclairer de manière à ce que, en fonction de ladite identification de l'obstacle, ladite zone à éclairer ne comporte pas l'obstacle détecté ou comporte l'obstacle à éclairer.

De préférence, lorsque l'obstacle détecté est un véhicule arrivant en sens inverse ou un véhicule suivi, les moyens de traitement sont agencés de manière à définir la zone à éclairer comme deux portions de zone situées horizontalement de part et d'autre de l'obstacle. Ainsi le véhicule n'est pas éclairé, son conducteur n'est pas ébloui et les portions de routes situées de part et d'autre de ce véhicule sont quant à elles éclairées pour améliorer la visibilité.

De préférence également, lorsque l'obstacle détecté est un panneau de signalisation ou un piéton ou encore tout obstacle autre qu'un véhicule arrivant en sens inverse ou un véhicule suivi, les moyens de traitement sont agencés de manière à définir la zone à éclairer comme une zone sensiblement centrée sur l'obstacle. L'invention permet donc au conducteur de voir l'obstacle plus tôt et avec une visibilité améliorée.

Les moyens d'émission comprennent des moyens optiques agencés de manière à augmenter la surface de la zone éclairée par ledit au moins un faisceau.

Avantageusement, les moyens d'émission comprennent au moins une source ponctuelle de lumière et les moyens optiques comprennent une seule lentille ou une pluralité de lentilles dont les foyers objet sont centrés sur ladite source ponctuelle de lumière, les moyens optiques étant en outre agencés de manière à ce que les images formées par les différentes lentilles forment une image finale continue, également désignée tache continue.

De préférence, les moyens optiques sont agencés pour que l'image finale forme sensiblement un L, la barre verticale du L étant orientée vers l'intérieur de la route et la barre horizontale du L étant orientée vers l'extérieur de la route. Préférentiellement, le coin du L est éclairé plus fortement que la le reste de la surface.

Dans un mode de réalisation particulier, le système comprend un projecteur avec au moins un boîtier de projecteur à l'intérieur duquel est logé ledit module d'éclairage, les moyens d'émission étant dans un module additionnel distinct du projecteur.

Le module additionnel est par exemple destiné à être monté séparément dans le pare-chocs ou dans le bouclier avant du véhicule.

Préférentiellement, le faisceau présentant une coupure en partie supérieure est un faisceau code. Ainsi, le module additionnel peut être couplé à un module d'éclairage connu de feu de croisement.

Le ou les faisceaux additionnels présentent une coupure verticale. Préférentiellement les coupures verticales sont destinées à délimiter la zone sombre que l'on place sur un véhicule dont le conducteur ne doit pas être ébloui.

Le module d'éclairage et le faisceau additionnel sont tous les deux associés à un dispositif de correction d'assiette, les deux corrections d'assiette respectives étant synchronisées de façon à assurer un positionnement relatif constant des coupures du faisceau d'éclairage et du faisceau additionnel, et ce quelles que soient les variations d'assiette du véhicule.

L'invention a également pour objet une unité optique pour un système selon la présente invention. Ladite unité optique comprend lesdits moyens d'émission dudit faisceau additionnel et est apte à fonctionner avec le module d'éclairage dudit système, de manière à ce que le faisceau additionnel soit mobile par rapport au faisceau présentant la coupure et soit situé au moins en partie au-dessus de cette coupure.

De manière facultative, ladite unité optique comprend au moins l'une quelconque des caractéristiques suivantes :
- Les moyens d'émission comprennent au moins une diode électroluminescente pour générer ledit au moins un faisceau additionnel.
- La réalisation du faisceau additionnel est obtenue par imagerie directe de la surface émettrice de ladite diode par un dispositif optique, telle qu'une lentille de type asphérique.
- La diode électroluminescente présente une surface éclairée avec des bords nets.
- La netteté Système selon la revendication précédente, dans lequel la netteté requise des bords de ladite surface éclairée est réalisée :
   - par un écran mécanique à proximité de la diode ou de l'image de la diode dans un plan intermédiaire,
   - par métallisation d'une glace optique fine accolée à la diode, ou
   - au moyen d'une diode dont l'élément photoémissif de la diode présente des flancs raides, ou des flancs masqués.
- Selon une variante de réalisation la diode électroluminescente est unique et associée avec une lentille unique.
- Selon une variante de réalisation, les moyens d'émission peuvent comprendre au moins une source ponctuelle de lumière et des moyens optiques, les moyens optiques comprenant une pluralité de lentilles dont les foyers objet sont centrés sur cette source ponctuelle de lumière et générant chacune une image, les moyens optiques étant en outre agencés de manière à ce que les images formées par les lentilles forment une image finale continue. Avantageusement, les moyens d'émission sont agencés pour former une image finale en forme de L dont la base est plus éclairée que le reste du L.
- Ladite unité optique est un module additionnel distinct du module d'éclairage. Le module d'éclairage peut être logé dans un boîtier qui lui est spécifique, par exemple le boîtier fermé par une glace transparente d'un projecteur, le module additionnel étant hors de ce boîtier.

Selon un autre objet de l'invention, on prévoit un projecteur à l'intérieur duquel est logé un système selon l'une quelconque des caractéristiques précédentes. Ainsi le module d'éclairage générant le faisceau à coupure et les moyens d'émission du faisceau additionnel sont intégrés dans un même ensemble. Cet ensemble forme un projecteur. Ce mode de réalisation est particulièrement avantageux en terme d'encombrement. De plus il limite les étapes d'intégration du système complet d'éclairage au sein du véhicule et présente l'avantage, de par sa petite taille, de ne pas affecter le style du projecteur principal.

Avantageusement, dans ce mode de réalisation, le dispositif d'émission est monté sur un correcteur d'assiette associé au projecteur, de sorte que la position verticale du faisceau additionnel est déterminée par le correcteur d'assiette. Si le faisceau à coupure est couplé avec le correcteur d'assiette, on obtient une position verticale relative entre la coupure et le faisceau additionnelle constante.

De manière alternative, le système comprend un boîtier de projecteur à l'intérieur duquel est logé le module d'éclairage, les moyens d'émission du faisceau additionnel étant situés en dehors du boîtier de projecteur

L'invention a également pour objet un véhicule comportant un système selon l'une quelconque des caractéristiques précédentes, comprenant au moins un boîtier de projecteur à l'intérieur duquel est logé le module d'éclairage et au moins un pare-chocs à l'intérieur duquel sont logés les moyens d'émission, les deux dispositifs pouvant être associés à des correcteurs d'assiette séparés mais cependant synchrones afin de garantir les positionnements respectifs du faisceau additionnel par rapport à la coupure.

Selon un autre objet de l'invention, on prévoit un procédé d'éclairage pour véhicule automobile comprenant la génération d'au moins un faisceau présentant une coupure en partie supérieure et caractérisé en ce qu'il comprend les étapes suivantes : émettre un faisceau additionnel situé au moins en partie au dessus de ladite coupure ; faire évoluer la position du faisceau additionnel en fonction de la présence d'au moins un obstacle et/ou de la courbure de la route.

De manière facultative, le procédé comprend les étapes suivantes : détecter un véhicule arrivant en sens inverse ou un véhicule suivi ; faire évoluer la position du faisceau additionnel de sorte à éclairer au moins une zone juxtaposée audit véhicule. Cette zone est située sur la droite ou sur la gauche du véhicule. De préférence, cette zone est située sur la droite et sur la gauche. L'évolution de la position du faisceau s'adapte donc à l'avancée de la voiture équipée et au déplacement dudit véhicule arrivant en sens inverse ou du véhicule suivi.

De manière facultative, le procédé comprend les étapes suivantes : émettre un deuxième faisceau additionnel mobile et situé au dessus de ladite coupure ; détecter un véhicule arrivant en sens inverse ou un véhicule suivi ou détecter un panneau de signalisation ou un piéton ; faire évoluer la position desdits faisceaux additionnels de manière à ce que lesdits faisceaux additionnels éclairent respectivement une zone située de part et d'autre dudit véhicule et n'éclairent pas ledit véhicule ou éclairent le panneau de signalisation ou le piéton.

De manière facultative, ledit procédé étant mis en oeuvre au moyen d'un système selon l'une quelconque des caractéristiques mentionnées précédemment.

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1 est un schéma illustrant un faisceau à coupure connu. Sur ce schéma, les moyens d'émission prévus par l'invention ne sont pas activés.
Les figures 2 à 4 sont des schémas illustrant le fonctionnement du système selon un exemple de réalisation de l'invention alors qu'un véhicule arrivant en sens inverse se rapproche du véhicule équipé.
Les figures 5 et 6 sont des schémas illustrant un mode particulier de fonctionnement du système selon l'invention, dans lequel les moyens d'émission fonctionnent alors que la fonction route est activée.
Les figures 7 à 16 sont des schémas illustrant différents modes de fonctionnement du système selon l'invention.
La figure 17 est un schéma de principe d'un dispositif selon l'invention pour émettre un faisceau additionnel sur la base d'une imagerie directe d'une diode émettrice présentant, lorsqu'elle est allumée, une surface éclairée avec des bords nets, et dont les rayons lumineux passent au travers une lentille de type asphérique. Il est alors particulièrement avantageux d'utiliser une diode émettrice de lumière présente une surface éclairée avec des bords nets, comme précédemment décrit.
La figure 18 est un schéma de principe illustrant des moyens optiques permettent d'étaler l'image formée par un dispositif selon l'invention pour émettre un faisceau additionnel présentant une forme et une répartition de lumière souhaitée à partir d'une diode électroluminescente.

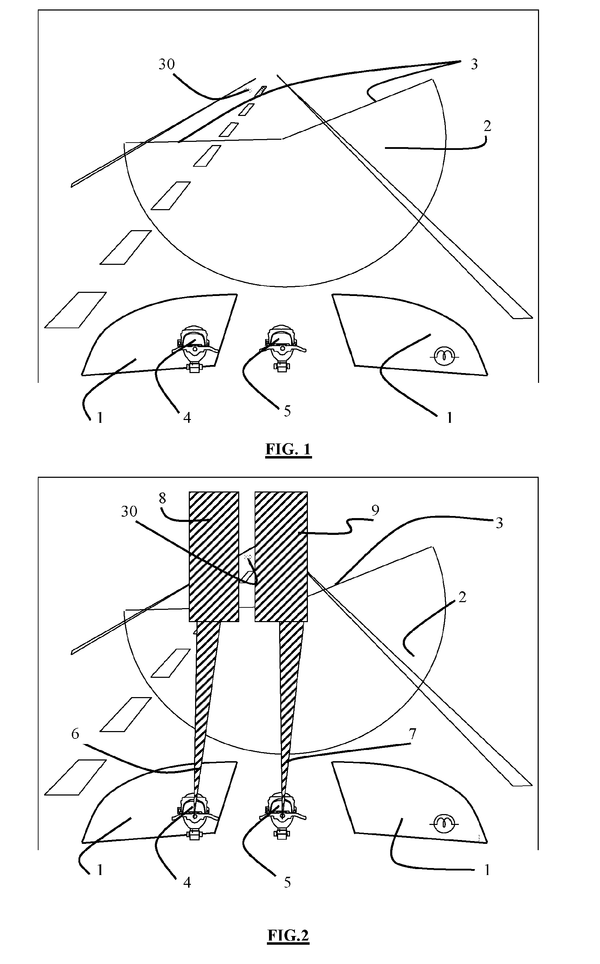

En référence aux figures 1 à 15, plusieurs modes de fonctionnement du système selon l'invention ont été illustrés.

Le système comprend au moins un système d'éclairage 1 configuré pour générer au moins un faisceau 2 présentant une coupure 3. Typiquement, le module 1 comprend un projecteur assurant une fonction de code. De préférence, le dispositif d'éclairage comprend deux modules 1. Chaque module génère un faisceau 2, 2 présentant une coupure 3, 3 en partie supérieure. L'ensemble des deux faisceaux à coupure donne typiquement une répartition lumineuse comme illustré en figure 1. La coupure du faisceau 2 est obtenue par exemple au moyen d'un cache occultant une partie supérieure du faisceau.

On rappelle qu'on désigne par coupure une discontinuité dans la forme du faisceau destinée à ne pas éblouir un véhicule arrivant en sens inverse. Une coupure en partie supérieure de faisceau signifie que la zone située au-delà de la coupure par rapport au véhicule émettant le faisceau est non éclairée ou moins éclairée que la zone adjacente à la coupure et située entre la coupure et le véhicule équipé du système d'éclairage.

Typiquement, la coupure est oblique sur la partie de route adjacente au bas-côté du côté de la chaussée sur laquelle roule le véhicule équipé du système d'éclairage, de sorte à éclairer plus loin ce bas-côté pour une visibilité accrue dans cette zone, et de sorte à éclairer moins loin vers le centre de la route pour ne pas éblouir un véhicule arrivant en sens inverse. Une portion de coupure peut également être sensiblement droite pour balayer le centre de la route et le côté de la chaussée opposé à celui sur laquelle roule le véhicule équipé du système d'éclairage (typiquement la chaussée gauche pour une conduite à droite) sans pour autant éclairer trop loin cette même chaussée.

La figure 1 dans laquelle les moyens d'émission caractéristiques de l'invention ne sont pas activés, est clairement représentative des inconvénients de la plupart des systèmes existants. Le faisceau 2 généré par les modules 1, 1, typiquement un faisceau de code, n'éblouit pas le véhicule arrivant en sens inverse. Cependant, la coupure 3 du faisceau est à une distance importante du véhicule 30 arrivant en sens inverse. La zone éclairée n'est donc pas optimale et la sécurité peut être améliorée.

Le véhicule équipé du système selon l'invention comprend au moins des moyens d'émission d'un faisceau additionnel 6, 7. Plus précisément, ce faisceau additionnel 6, 7 est émis par un dispositif d'émission 4, 5. La tache 8, 9 qu'il émet est située au moins en partie au-dessus de la coupure 3 du faisceau 2. Dans la présente demande, on considère qu'un faisceau additionnel est en partie au moins situé au-dessus de la coupure 3 lorsqu'au moins la majeure partie de la tache qu'il génère est située au-delà de la coupure 3. De manière préférée mais non limitative, les moyens d'émission sont agencés pour générer deux faisceaux additionnels 6, 7. Chaque faisceau additionnel 6, 7 est mobile.

Les moyens d'émission permettent donc d'améliorer la visibilité du conducteur au-delà de la coupure 3.

Ce système comprend également des moyens de détection d'obstacles. Dans la présente demande, on désigne par obstacle aussi bien un objet mobile tel qu'un véhicule 30 arrivant en sens inverse ou un piéton 31 sur la chaussée ou en bordure de chaussée, qu'un objet immobile tel qu'un panneau de signalisation 32, un véhicule immobile ou tout autre objet situé sur la chaussée ou sur le bas-côté.

Par exemple, les moyens de détection peuvent comprendre une caméra. Le système comprend également des moyens de commande agencés pour commander la position du ou des faisceaux additionnels 6, 7 en fonction de la position de l'obstacle 30, 31, 32.

Dans l'exemple qui suit, illustré aux figures 2 à 4, l'obstacle est un véhicule 30 arrivant en sens inverse. Les moyens de détection détectent ce véhicule, les moyens de commande commandent alors le dispositif d'émission 4, 5 pour émettre un faisceau 5, 6 sur une zone adjacente au véhicule 30 arrivant en sens inverse et sans pour autant éclairer ce véhicule 30. Le conducteur de ce véhicule 30 n'est donc pas ébloui.

De préférence, les moyens de commande sont agencés pour commander les deux faisceaux additionnels 6, 7 de sorte que ces deux faisceaux additionnels 6, 7 éclairent des zones 8, 9 situées de part et d'autre du véhicule 30 selon une direction horizontale ou transversale à la route.

Le système selon l'invention permet ainsi au pilote du véhicule équipé d'avoir une visibilité optimale de la route et de ces abords sans pour autant éblouir les véhicules croisés.

Les moyens de détection identifient la position du véhicule croisé 30 au cours de l'avancée respective de ce véhicule croisé 30 et du véhicule équipé. Les moyens de commande agissent alors sur les faisceaux additionnels 6, 7 pour adapter leur position à la nouvelle position relative du véhicule croisé 30 par rapport au véhicule équipé du système d'éclairage.

Comme cela apparaît clairement sur la figure 2, lorsque le véhicule croisé 30 est situé quasiment en face du véhicule équipé du système d'éclairage, les deux faisceaux additionnels 6, 7 sont sensiblement parallèles.

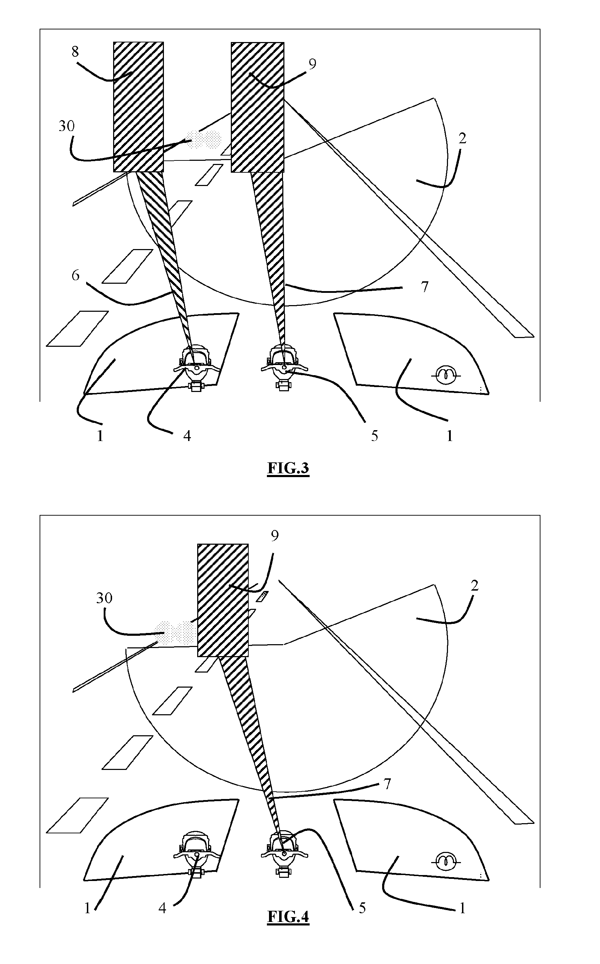

En figure 3, les deux véhicules se sont rapprochés. Le véhicule croisé 30 se décale donc sur la gauche du véhicule équipé (dans le cas d'une conduite à droite). Les moyens de commande agissent donc sur les deux faisceaux additionnels 6, 7 pour les décaler vers la gauche de sorte à faire glisser la zone non éclairée en l'élargissant suivant la position du véhicule croisé 30.

Le système selon l'invention génère donc une sorte de tunnel non éclairé dont les bords sont éclairés et qui suit la position relative d'un véhicule 30 arrivant en sens inverse par rapport à un véhicule muni du système.

Les faisceaux additionnels 6, 7 sont ainsi mobiles notamment de sorte à ce que la zone qu'ils éclairent se déplace selon une direction sensiblement horizontale. De préférence, ils sont mobiles en rotation autour d'un axe sensiblement vertical. Leur mobilité s'inscrit dans un secteur angulaire dont l'amplitude est comprise entre -8° et +20°. De préférence, si la direction parallèle à l'axe d'avancée du véhicule a pour référence 0°, le faisceau de gauche 6 évolue entre -18° et +5° et le faisceau de droite 7 évolue entre -5° et +18°. Cela permet de bien éclairer le bas-côté et les courbes de la route.

En figure 4, le véhicule croisé 30 s'est encore rapproché. Les moyens de commande agissent de sorte à décaler le faisceau additionnel de droite 7 vers la gauche jusqu'à entrer en butée en limite de son secteur angulaire. Le faisceau additionnel de gauche 6, parvient en butée à la limite de son secteur angulaire et est automatiquement désactivé pour ne pas éclairer le véhicule 30 arrivant en sens inverse lors du croisement des deux véhicules.

Avantageusement, la position d'un faisceau additionnel est indépendante de la position de l'autre faisceau additionnel. Les faisceaux additionnels 6, 7 peuvent être déplacés de manière non symétrique et/ou non simultanée.

De préférence, le système comprend également des moyens configurés pour identifier la nature de l'obstacle détecté par les moyens de détection. Les moyens de commande agissent ainsi sur la position du faisceau additionnel en fonction de la localisation et de la nature de l'obstacle. Ainsi, comme illustré précédemment, si l'obstacle est un véhicule 30 arrivant en sens inverse ou un véhicule suivi, les faisceaux additionnels 6, 7 sont dirigés de sorte à ne pas éclairer ce véhicule. Au contraire, si l'obstacle est un piéton 31 ou un panneau de signalisation 32, les faisceaux additionnels 6, 7 sont dirigés de sorte à éclairer cet obstacle. La détection d'un piéton par la caméra est souvent associée à l'illumination de la scène par un projecteur spécifique infrarouge ou par l'apport d'informations issues d'une caméra thermique fonctionnant dans la zone de radiations de 8µm à 12µm.

Ainsi, le système définit une zone à éclairer en fonction de la position et de la nature de l'obstacle. Selon la nature de l'obstacle, la zone à éclairer peut soit exclure l'obstacle pour en éclairer au moins en partie sa périphérie ou soit inclure l'obstacle en étant de préférence sensiblement centré sur ce dernier.

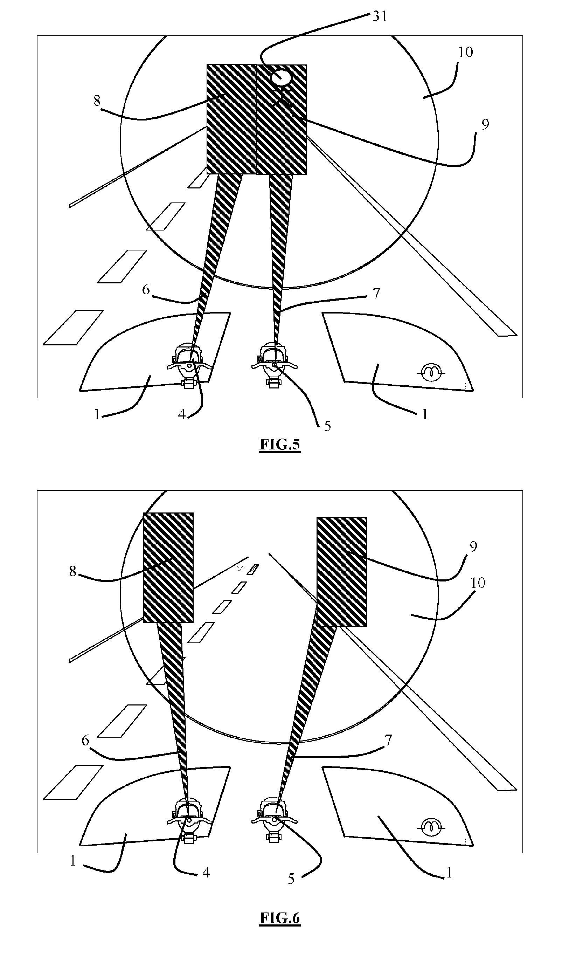

Sur les exemples illustrés en figures 5 et 6, les moyens d'émission sont activés alors que le véhicule est en mode feux de route. Le faisceau 10 généré ne présente alors pas de coupure. L'activation des moyens d'émission permet de renforcer le flux lumineux pour améliorer la visibilité. Les faisceaux additionnels 6, 7 sont positionnés sensiblement au niveau de la ligne d'horizon et suivent de préférence la courbure de la route. Les données de courbure peuvent être issues de données de navigation renseignant sur la topologie de la route et/ou issues de capteurs, par exemple la détection de lignes blanches par caméra.

De préférence, lorsqu'un obstacle est détecté, tel qu'un piéton 31 comme illustré en figure 5, les faisceaux additionnels 6, 7 se positionnent de sorte à l'éclairer. De préférence, lorsque aucun obstacle n'est détecté, les faisceaux additionnels 6, 7 se positionnent de façon à éclairer les bas-côtés de la route tel qu'illustré en figure 6. La visibilité de la bordure de la route en est ainsi renforcée.

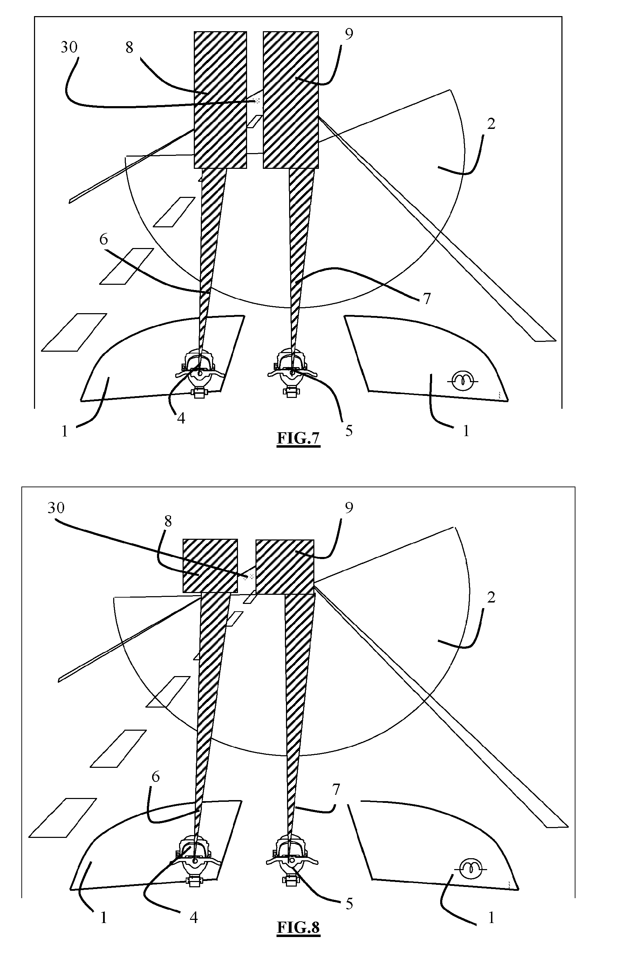

En figure 7, les taches produites 8, 9 par les faisceaux additionnels 6, 7 au-dessus de la coupure 3 sont sensiblement allongées selon une direction parallèle à l'avancée du véhicule équipé du système selon l'invention. Ceci peut être mis à profit pour désolidariser les faisceaux additionnels du correcteur d'assiette du faisceau principal sans nuire à la fonctionnalité.

En figure 8, la tache produite par chacun des faisceaux additionnels 6, 7 est moins allongée qu'en figure 7. Ce type de tache est avantageusement obtenu par un dispositif d'émission 4, 5 ne présentant qu'une ou deux diodes électroluminescentes (DEL). Dans cet exemple, les dispositifs d'émission 4, 5 sont avantageusement situés hors des projecteurs émettant le faisceau 2 présentant une coupure 3.

De préférence, ces dispositifs de taille réduite sont situés dans les pare-chocs. La position verticale des faisceaux additionnels 6, 7 peut alors être fonction de l'assiette du véhicule. Cette position peut être commandée par des données issues d'un système de correction d'assiette. Si le faisceau à coupure est couplé avec le correcteur d'assiette, la position verticale relative entre la coupure 3 et le faisceau additionnel demeure alors constante. Ainsi, la position de la tache 8, 9 est parfaitement contrôlée et demeure par exemple entièrement au-dessus de la coupure 3 ou à la limite de la coupure 3. Ce couplage de la position verticale du faisceau additionnel et de l'assiette du véhicule peut être employé que l'implantation des dispositifs 4, 5 soit située dans ou hors du module d'éclairage et quelle que soit la nature de la source lumineuse. L'implantation dans le pare-chocs présente l'avantage de désolidariser la fonction liée au faisceau additionnel du projecteur principal, en ce sens qu'elle libère les contraintes liées au style du projecteur principal et peut se monter en option ou deuxième monte sur tous les types de véhicules.

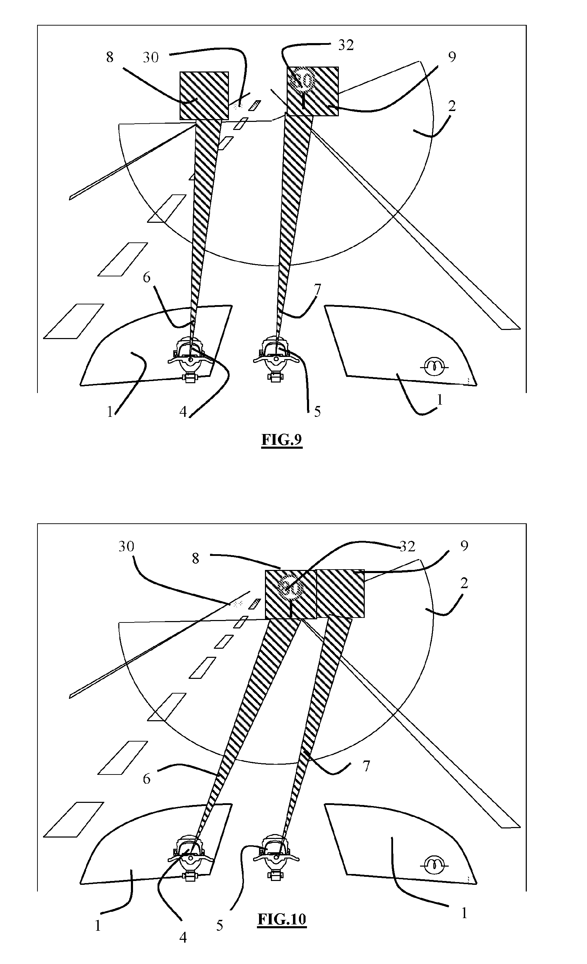

Les faisceaux additionnels 6, 7 sont mobiles horizontalement au-dessus de la coupure 3. Ainsi, ils peuvent être positionnés de sorte à ce que le faisceau additionnel de droite 7 éclaire un panneau de signalisation 32 situé sur la droite de la chaussée et de sorte que le faisceau additionnel de gauche 6 éclaire le bas-côté gauche de la route. Ce mode de fonctionnement est illustré en figure 9. Les faisceaux additionnels 6,7 peuvent également être positionnés de sorte que le faisceau additionnel de droite 7 éclaire le bas-côté droit de la chaussée et que le faisceau additionnel de gauche 6 éclaire un panneau de signalisation 32 situé en bordure de la chaussée de droite. Ce mode de fonctionnement est illustré en figure 10.

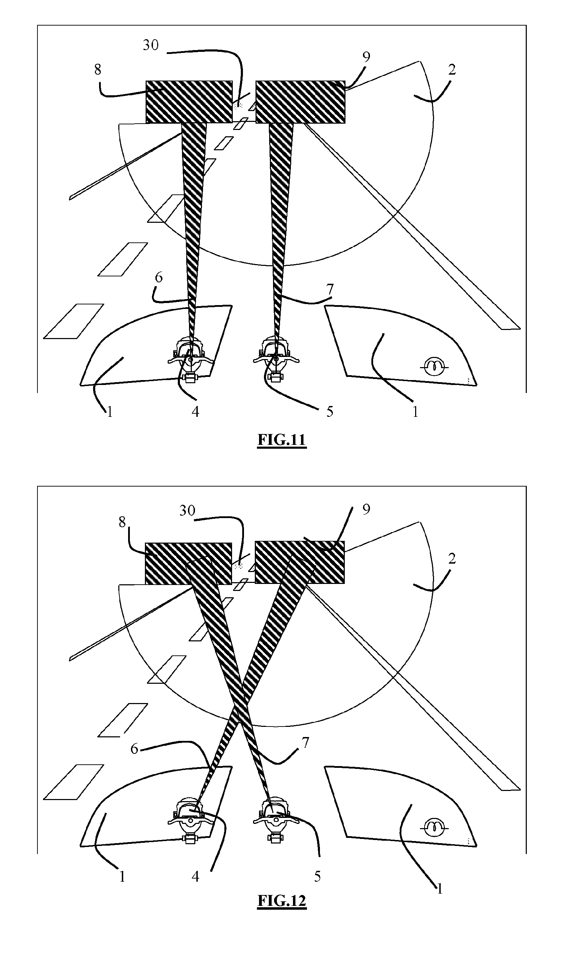

En fonction de la source de lumière utilisée et d'éventuels moyens optiques associés à la source, on peut obtenir des formes variées pour les taches 8, 9 générées par le faisceau additionnel. Différentes formes de taches sont représentées en figure 11 à 16.

De préférence, la source de lumière comprend au moins une diode électroluminescente également désignée par son acronyme français DEL ou anglais LED. De préférence cette source présente une surface éclairée avec des bords nets et minimise les effets de réflexions secondaires liées à sa structure.

En figures 11 à 13, on a illustré des taches 8, 9 s'étendant sensiblement selon une direction horizontale. De préférence, ces taches 8, 9 sont obtenues par une pluralité de DEL, au moins deux, disposées horizontalement. On peut également prévoir au moins des moyens optiques répartissant horizontalement le flux généré par une source ponctuelle.

En figure 11, le faisceau additionnel de gauche 6 éclaire une zone située à gauche d'un véhicule 30 arrivant en sens inverse et le faisceau additionnel de droite 7 éclaire une zone située à droite de ce véhicule 30.

En figure 12, les faisceaux additionnels 6, 7 de droite et de gauche se croisent. Le faisceau additionnel de gauche 6 éclaire claire une zone située à droite du véhicule 30 arrivant en sens inverse et le faisceau additionnel de droite 7 éclaire une zone située à gauche de ce véhicule 30.

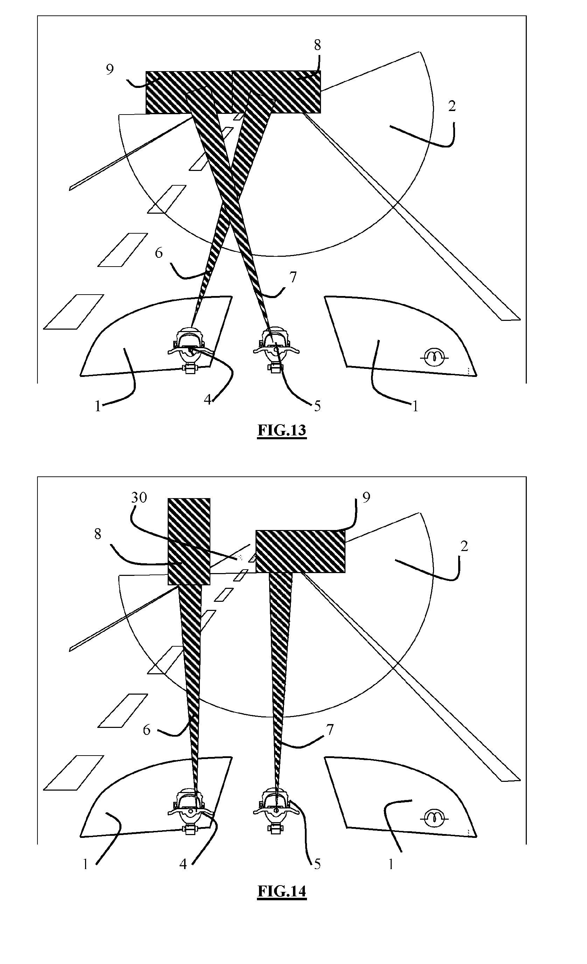

En figure 13, les taches 8, 9, générées par les faisceaux additionnels 6, 7 qui se croisent, sont jointes de sorte à éclairer le centre de la route au niveau de la ligne d'horizon.

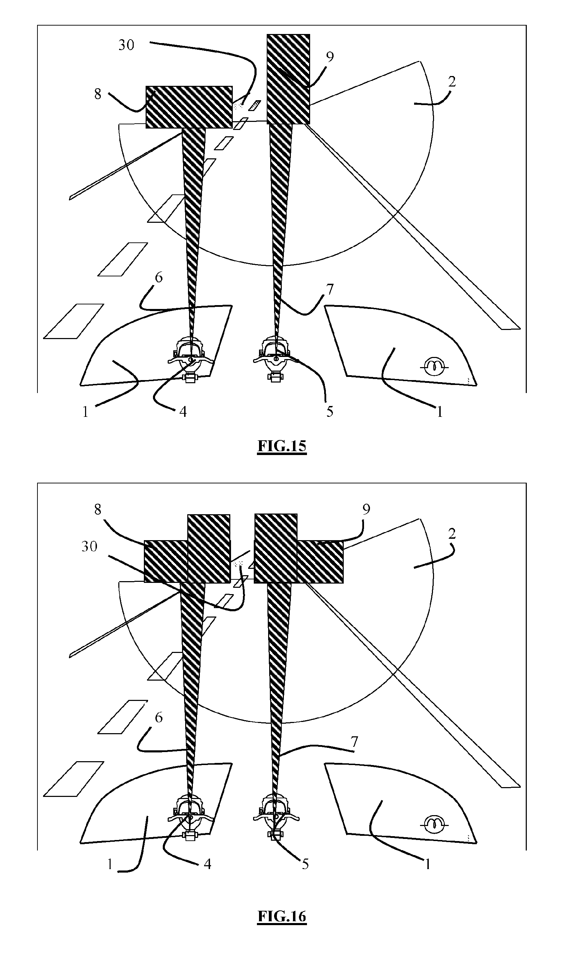

En figures 14 et 15, les taches 8, 9 générées par les faisceaux additionnels 6, 7 sont dissymétriques. En figure 14, le faisceau additionnel de gauche 6 génère une tache s'étendant sensiblement verticalement et le faisceau additionnel de droite 7 génère une tache s'étendant sensiblement horizontalement. A l'inverse en figure 15, le faisceau additionnel de gauche 6 génère une tache s'étendant sensiblement horizontalement et le faisceau additionnel de droite 7 génère une tache s'étendant sensiblement verticalement. Cette disposition des illuminations générées présente l'avantage d'offrir deux types d'éclairage adaptés à l'illumination d'obstacles de différentes topologie, par exemple un piéton et un véhicule sur le travers.

En figure 16, les taches 8, 9 générées par les faisceaux additionnels 6, 7 présentent sensiblement une forme de L dont la barre verticale s'étend sensiblement dans la direction d'avancée du véhicule équipé du système selon l'invention. La barre transversale du L, également désignée base du L, s'étend depuis le centre de la route vers le bas-côté. Ainsi la tache générée par le faisceau de droite 7 forme un L et la tache générée par le faisceau de gauche 6 forme le symétrique de la tache de droite. Cette configuration permet de bien éclairer au loin le centre de la route pour mieux appréhender les courbures à venir ainsi que sur les bas-côtés à une distance moindre pour mieux visualiser des panneaux de signalisation 32 ou tout autre obstacle à l'approche plus immédiate du conducteur, sans pour autant perdre de l'énergie dans la partie externe qui ne contient aucune information utile au conducteur.

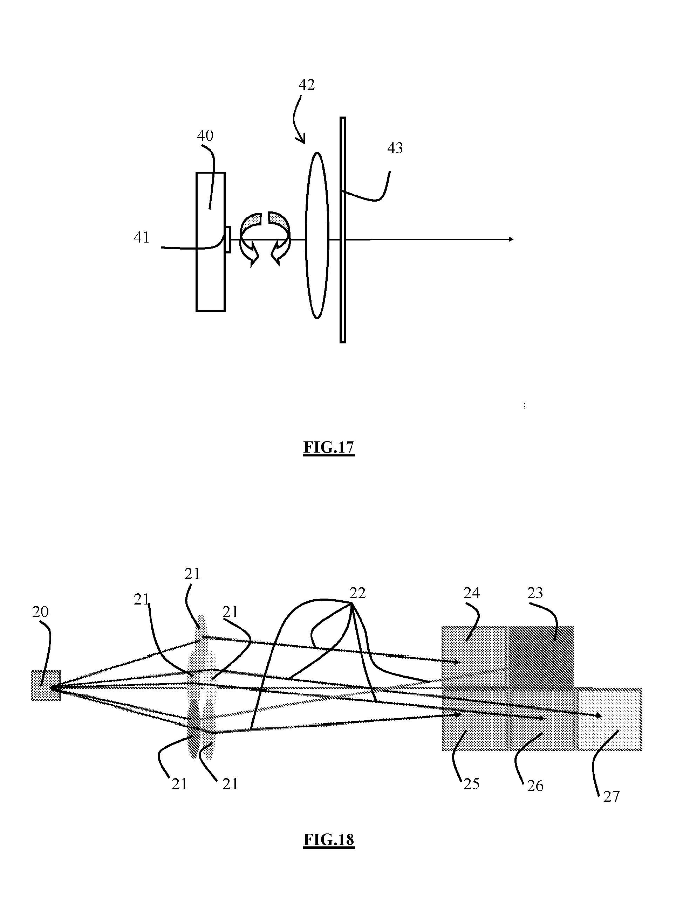

Comme indiqué précédemment, afin d'obtenir la forme souhaitée de la tache générée, on peut utiliser des moyens optiques. A titre d'exemple, des moyens optiques sont illustrés en figure 18. Sur cet exemple, la source de lumière 20 peut être ponctuelle, il s'agit de préférence d'une DEL. Les moyens optiques comprennent une lentille présentant une pluralité de facettes 21, 21, 21, 21, 21 au travers desquelles passent une partie du flux émis par la source 20. Alternativement, cette lentille à plusieurs facettes peut être remplacée par une pluralité de lentilles. La source 20 est positionnée au foyer objet des lentilles. Les moyens optiques selon l'invention remplacent ainsi une lentille simple utilisée dans le cadre d'un éclairage traditionnel par DEL. Chaque facette génère à sa sortie un sous-faisceau 22, 22, 22,22, 22 de sorte que chaque sous faisceau crée une image distincte 23, 24, 25, 26, 27. Les moyens optiques sont agencés de sorte que les images sont juxtaposées pour former une tache continue. Sur cet exemple, cinq facettes permettent de générer cinq sous-faisceaux générant chacun une image 23, 24, 25, 26, 27, l'ensemble de ces images définissant sensiblement un L dont la répartition lumineuse est contrôlée par les surfaces respectives de chaque lentille.

En l'absence de moyen optique, le faisceau généré par une DEL associée à une lentille simple peut être souvent trop petit ou trop puissant ce qui peut gêner le conducteur. Typiquement, à cent mètres un faisceau généré par une diode de 1 mm de coté au foyer d'une lentille de focale 40mm et de diamètre 55mm présente une taille de 2,5 mètres par 2,5 mètres. Les moyens optiques selon l'invention permettent par exemple de répartir la lumière sur une pluralité d'images de 2,5 mètres sur 2,5 mètres chacune à environ cent mètres.

Le niveau d'éclairage des images est sensiblement proportionnel à la surface de chaque lentille. L'invention permet ainsi d'obtenir des images d'intensité lumineuse différente. De préférence, on accentue l'éclairage au niveau du pied du L.

Par exemple, si le flux émis est de 230 lm, au lieu d'obtenir une tache de 2,5 x 2,5 mètres de 200 lx, l'invention permet d'obtenir une tache formée d'une image 25 de 100 lx pour une bonne visibilité au pied du L, une image 26 de 35 lx, une image 27 de 15 lx, une image 24 de 35 lx et une image 23 de 15 lx.

De manière avantageuse, chaque dispositif 4, 5 émettant un faisceau additionnel comporte une seule DEL. Cette solution a pour avantage de limiter considérablement l'encombrement et le poids du dispositif. En outre, la gestion de la thermique en est simplifiée ce qui réduit encore l'encombrement de l'ensemble et facilite son implantation au sein du véhicule. Avantageusement, un tel dispositif peut être implanté au sein même d'un projecteur ou dans un autre élément du véhicule tel qu'un pare-chocs.

Typiquement, avec une DEL unique de 5 watts, le dispositif prévoit des ailettes pour l'évacuation des calories. Pour un nombre significativement plus important de DEL ou pour une puissance significativement plus importante on peut prévoir, de manière cumulative ou alternative, un ventilateur pour évacuer les calories. Dans tous les modes de réalisation précédemment décrits, la position verticale des faisceaux additionnels 6, 7 peut être déterminée par un système de correction d'assiette ou par un capteur utilisant une caméra par exemple. Il est à noter que l'augmentation des performances des diodes permet d'augmenter les performances de la fonction et/ou de réduire son poids et son encombrement de manière significative.

A titre non limitatif, en référence à la figure 17, un autre exemple de dispositif d'émission selon l'invention est également décrit. Le dispositif comporte une DEL 41 dont la face arrière, non destinée à émettre la lumière est associée à des moyens d'évacuation des calories, typiquement des ailettes et/ou un ventilateur. Une lentille intérieure 42 de type asphérique forme l'image de la DEL. Préférentiellement et tel que représenté en figure 17, le dispositif comprend une seule DEL 41 et une seule lentille intérieure 42 de type asphérique pour former l'image de la DEL 41. Le dispositif comporte également en sortie une lentille glace de protection 43.

A titre d'exemple, un tel dispositif présente les dimensions maximales suivantes : une longueur de 65mm selon l'axe optique et un diamètre de 35 mm. Un tel dispositif peut également présenter les caractéristiques suivantes :
- DEL constituée de deux éléments photoémissifs jointifs de 1 mm x1 mm, de puissance unitaire 230Im à 1A et présentant une surface éclairée avec des bords nets, réalisée par exemple par métallisation d'une glace de protection de 0,3mm d'épaisseur délimitant la surface d'émission et supprimant les réflexions parasites
- Lentille asphérique plastique traitée AR
- Distance focale : 20 mm
- Diamètre efficace du flux : 30 mm
- Transmission de la lentille interne : 0,95
- Transmission de la lentille externe : 0,85

La tache rectangulaire obtenue à 100m mesure 5mx10m et offre un éclairement de 4,37Ix, à 100m, ce qui est supérieur à la limite de 4Ix communément admise pour la détection des piétons.

L'augmentation de la performance des diodes permet d'augmenter l'intensité et/ou les tailles de taches et/ou des réductions de taille, de poids, de consommation et de la chaleur à dissiper pour les dispositifs comprenant de telles diodes.

Ce module est monté en rotation pour adapter la position du faisceau additionnel aux conditions de circulation. Ce dispositif peut être monté dans un projecteur ou phare. De par son faible poids et sa faible taille, quatre fois plus léger que les dispositifs connus, il peut être monté sur le même système de correction d'assiette (souvent désigné par son acronyme anglo-saxon ALWR) que le projecteur sans affecter la conception même du projecteur.

Ainsi, l'invention permet de réaliser une fonction d'éclairage adaptative directionnelle de façon simple et peu coûteuse. En outre, elle présente un encombrement et un poids limité permettant son intégration aussi bien à l'intérieur d'un projecteur que dans de nombreuses autres parties d'un véhicule tel un pare-chocs.

L'invention n'est pas limitée aux modes de réalisation décrits mais s'étend à tout mode de réalisation conforme à son esprit.

### REFERENCES

- 1.: module d'éclairage
- 2.: faisceau à coupure
- 3.: coupure
- 4.: dispositif d'émission
- 5.: dispositif d'émission
- 6.: faisceau additionnel
- 7.: faisceau additionnel
- 8.: tache du faisceau additionnel
- 9.: tache du faisceau additionnel
- 10.: faisceau longue portée
- 20.: source de lumière
- 21.: facettes
- 22.: sous faisceaux
- 23.: images
- 24.: images
- 25.: images
- 26.: images
- 27.: images
- 30.: véhicule arrivant en sens inverse
- 31.: piéton
- 32.: panneau de signalisation
- 40.: moyens d'évacuation de la chaleur
- 41.: diode électroluminescente
- 42.: optique
- 43.: glace externe de protection

## Revendications

1. Système d'éclairage pour véhicule automobile comprenant au moins un module d'éclairage (1) configuré pour générer au moins un faisceau (2) présentant une coupure (3) en partie supérieure, **caractérisé en ce qu'**il comprend des moyens d'émission (4, 5) d'au moins un faisceau additionnel (6, 7) configurés de manière à ce que le faisceau additionnel (6, 7) est mobile par rapport au faisceau (2) présentant la coupure et est situé au moins en partie au-dessus de ladite coupure (3).

2. Système selon la revendication précédente dans lequel les moyens d'émission (4, 5) sont agencés de sorte que ledit au moins un faisceau additionnel (6, 7) est au moins mobile en rotation autour d'une direction sensiblement verticale.

3. Système selon l'une quelconque des revendications précédentes dans lequel les moyens d'émission comprennent un premier dispositif d'émission (4) agencé pour générer un premier faisceau additionnel (6) et un deuxième dispositif d'émission (5) agencé pour générer un deuxième faisceau additionnel (7), le premier et le deuxième faisceaux additionnels (6, 7) étant mobiles indépendamment l'un de l'autre et situés au moins en partie au-dessus de la coupure (3).

4. Système selon l'une quelconque des revendications précédentes comprenant des moyens de détection et de localisation d'un obstacle (30, 31, 32), des moyens de traitement configurés pour définir au moins une zone à éclairer en fonction de la détection et de la localisation dudit obstacle (30, 31, 32) et des moyens de commande pour diriger ledit au moins un faisceau additionnel (6, 7) sur ladite au moins une zone à éclairer.

5. Système selon la revendication précédente dans lequel les moyens de traitement sont configurés pour identifier l'obstacle (30, 31, 32) et pour définir la zone à éclairer de manière à ce que, en fonction de ladite identification de l'obstacle (30, 31, 32), ladite zone à éclairer ne comporte pas ledit obstacle (30) détecté ou comporte ledit obstacle (31, 32).

6. Système selon l'une quelconque des deux revendications 4 à 5 prises dans leur combinaison avec la revendication 3, dans lequel lorsque l'obstacle détecté est un véhicule arrivant en sens inverse (30), les moyens de traitement sont agencés pour diriger les faisceaux (6, 7) de manière à éclairer deux portions (8, 9) de zone situées de part et d'autre dudit véhicule (30).

7. Système selon l'une quelconque des revendications précédentes, dans lequel le faisceau (2) présentant une coupure (3) en partie supérieure est un faisceau code.

8. Système selon l'une quelconque des revendications précédentes, dans lequel le ou les faisceaux additionnels (6, 7) présentent une coupure verticale.

9. Système selon l'une quelconque des revendications précédentes, comprenant un projecteur avec au moins un boîtier de projecteur à l'intérieur duquel est logé ledit module d'éclairage (1), les moyens d'émission (4, 5) étant dans un module additionnel distinct du projecteur.

10. Unité optique pour un système selon l'une des revendications précédentes, ladite unité optique comprenant lesdits moyens d'émission (4, 5) (4, 5) dudit faisceau additionnel (6, 7) et étant apte à fonctionner avec le module d'éclairage (1) dudit système de manière à ce que le faisceau additionnel (6, 7) soit mobile par rapport au faisceau (2) présentant la coupure et soit situé au moins en partie au-dessus de ladite coupure (3).

11. Unité optique selon la revendication précédente, dans laquelle les moyens d'émission (4, 5) comprennent au moins une diode électroluminescente pour générer ledit au moins un faisceau additionnel (6, 7).

12. Unité optique selon la revendication précédente, dans laquelle la réalisation du faisceau additionnel (6, 7) est obtenue par imagerie directe de la surface émettrice de ladite diode par un dispositif optique telle qu'une lentille de type asphérique (42).

13. Unité optique selon la revendication 11 ou 12, dans laquelle la diode électroluminescente présente une surface éclairée avec des bords nets.

14. Unité optique selon la revendication précédente, dans laquelle la netteté requise des bords de ladite surface éclairée est réalisée :
- par un écran mécanique à proximité de la diode ou de l'image de la diode dans un plan intermédiaire,
- par métallisation d'une glace optique fine accolée à la diode, ou
- au moyen d'une diode dont l'élément photoémissif de la diode présente des flancs raides, ou des flancs masqués.

15. Unité optique l'une quelconque des revendications 10 à 14, dans laquelle les moyens d'émission comprennent au moins une source (20) ponctuelle de lumière et des moyens optiques, les moyens optiques comprenant une pluralité de lentilles (21, 21, 21, 21, 21) dont les foyers objet sont centrés sur ladite source (20) ponctuelle de lumière et générant chacune image (23, 24, 25, 26, 27), les moyens optiques étant en outre agencés de manière à ce que les images (23, 24, 25, 26, 27) formées par les lentilles forment une image finale continue (8, 9).

16. Unité optique selon l'une des revendications 10 à 15, ladite unité optique étant un module additionnel distinct du module d'éclairage (1).

17. Projecteur à l'intérieur duquel est logé un système selon l'une quelconque des revendications 1 à 8 et/ou une unité optique selon l'une quelconque des revendications 10 à 15.

18. Procédé d'éclairage pour véhicule automobile comprenant la génération d'au moins un faisceau (2) présentant une coupure (3) en partie supérieure et **caractérisé en ce qu'**il comprend les étapes suivantes :
- émettre un faisceau additionnel (6, 7) situé au moins en partie au dessus de ladite coupure (3),
- faire évoluer la position du faisceau additionnel (6, 7).

19. Procédé selon la revendication précédente comprenant les étapes additionnelles suivantes :
- détecter un véhicule (30) arrivant en sens inverse ou un véhicule suivi,
- faire évoluer la position du faisceau additionnel (6, 7) de sorte à éclairer au moins une zone adjacente audit véhicule.

20. Procédé selon la revendication précédente comprenant les étapes additionnelles suivantes :
- émettre un deuxième faisceau additionnel (6, 7) mobile et situé au dessus de ladite coupure (3),
- détecter un véhicule (30) arrivant en sens inverse ou un véhicule suivi ou détecter un panneau de signalisation (32) ou un piéton (31),
- faire évoluer la position desdits faisceaux additionnels (6, 7) de manière à ce que lesdits faisceaux additionnels (6, 7) éclairent respectivement une zone (8, 9) située de part et d'autre dudit véhicule (30) et n'éclairent pas ledit véhicule (30) ou de manière à ce que au moins l'un desdits faisceaux additionnels (6, 7) éclaire le panneau de signalisation (32) ou le piéton (31).

21. Procédé selon l'une quelconque des revendications 18 à 20, ledit procédé étant mis en oeuvre au moyen d'un système selon l'une des revendications 1 à 9.
